**Europäisches Patentamt**

**European Patent Office**

**Office européen des brevets**

(19)

(11) Veröffentlichungsnummer: **0 025 943**

**A1**

(12) **EUROPÄISCHE PATENTANMELDUNG**

(21) Anmeldenummer: **80105424.8**

(22) Anmeldetag: **11.09.80**

(51) Int. Cl.³: **A 47 J 17/18**

(30) Priorität: **21.09.79 DE 2938207**

(43) Veröffentlichungstag der Anmeldung:
**01.04.81 Patentblatt 81/13**

(84) Benannte Vertragsstaaten:
**AT BE CH DE FR GB IT LI NL SE**

(71) Anmelder: **Alexanderwerk Aktiengesellschaft**
**Postfach 100720 Kippdorfstrasse 6-24**
**D-5630 Remscheid 1(DE)**

(72) Erfinder: **Grabowski, Hans**
**Vieringhausen 33**
**D-5630 Remscheid,(DE)**

(74) Vertreter: **Dipl.-Ing. W. Cohausz Dipl.-Ing. R. Knauf**
**Dipl.-Ing. H.B. Cohausz**
**Dipl.-Ing. D.H. Werner Patentanwälte Schumannstrasse**
**97**
**D-4000 Düsseldorf(DE)**

(54) **Scheibe zum Schälen von Früchten.**

(57) Die Erfindung betrifft eine kreisförmige Scheibe (1) zum Schälen von Früchten, insbesondere Knollenfrüchten und Rüben, mit auf der Scheibe angeordneten Reib- oder Schneidelementen (5), wobei die Früchte während ihrer Bearbeitung von innen nach außen oder umgekehrt auf der Scheibe wandern. Die Reib- oder Schneidfläche ist in mindestens zwei aneinander angrenzende, zum Scheibenmittelpunkt konzentrische Kreisringbereiche (A,B) unterteilt, von denen der oder die Bereich(e) (A), durch den oder durch die die Früchte zuerst bearbeitet werden, eine gröbere Schälung bewirkende Schneiden oder Reibfläche(n) aufweisen als der oder die übrigen Bereich(e). (B)

Fig. 1

EP 0 025 943 A1

Alexanderwerk Aktiengesellschaft

Kippdorfstr. 6-24

5630 Remscheid 1

Scheibe zum Schälen von Früchten

Die Erfindung betrifft eine kreisförmige Scheibe zum
Schälen von Früchten, insbesondere Knollenfrüchten und
Rüben, mit auf der Scheibe angeordneten Reib- oder
Schneidelementen, wobei die Früchte während ihrer Bearbeitung von innen nach außen oder umgekehrt auf der
Scheibe wandern.

Eine derartige Scheibe ist aus der DE-OS 26 26 646
bekannt. Die aus dieser Schrift bekannte Schälscheibe
weist über ihrer gesamten Oberfläche Öffnungen mit
gleich hohen Schälschneiden auf, so daß während der
Bearbeitung die Früchte ständig eine gleich starke
Schälleistung erbringen. Bei diesen bekannten Schälscheiben hat es sich gezeigt, daß ein verhältnismäßig
hoher Schälverlust entsteht und die Früchte eine nicht
ausreichend glatte Oberfläche nach dem Schälvorgang
erhalten.

Aufgabe der Erfindung ist es, eine Schälscheibe der
eingangs genannten Art derart zu verbessern, daß bei

33 315
HC/Be

hoher Schälleistung und restlosem Entfernen der Schale
bzw. Haut ein geringer Verlust an Schälabfällen entsteht und eine ausreichend glatte Oberfläche an den
Früchten erreicht wird.

Diese Aufgabe wird erfindungsgemäß dadurch gelöst, daß
die Reib- oder Schneidfläche in mindestens zwei aneinander angrenzende, zum Scheibenmittelpunkt konzentrische Kreisringbreiche unterteilt ist, von denen der
oder die Bereich(e), durch den oder durch die die
Früchte zuerst bearbeitet werden, eine gröbere Schälung
bewirkende Schneiden oder Reibfläche(n) aufweisen als
der oder die übrige(n) Bereich(e).

Durch die erfindungsgemäße Lösung gelingt es, die
Früchte anfänglich grob zu schälen und damit die Schale
ausreichend abzuheben, so daß die darauf folgende Feinbearbeitung nur noch wenig von der Oberfläche der Früchte
abhebt und diese glättet. Es wird ein verbessertes
Schälergebnis erreicht, ferner eine Schälzeitersparnis
von bis zu 20%, und der Schälverlust geht bis auf 4%
und mehr zurück.

Vorteilhafte Ausgestaltungen der Erfindung sind in den
Unteransprüchen aufgeführt.

Ein Ausführungsbeispiel der Erfindung ist in der Zeichnung dargestellt und wird im folgenden näher beschrieben.
Es zeigen:

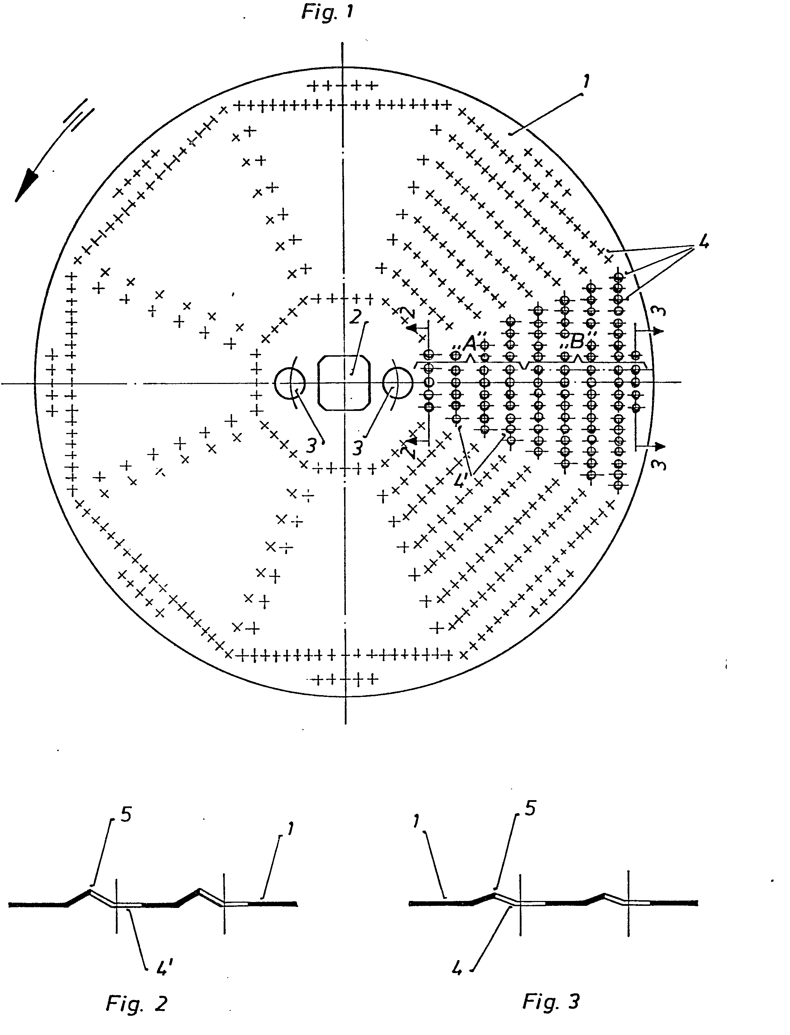

Fig. 1     eine Draufsicht auf die Schälscheibe;

Fig. 2     einen Schnitt nach 2-2 in Fig. 1; und

Fig. 3          einen Schnitt nach 3-3 in Fig. 1.

Die kreisförmige Schälscheibe 1 weist eine Mittelöffnung 2 für die Antriebsachse auf, und seitlich zu
dieser Mittelöffnung zwei Fingerlöcher 3 für ein leichtes Abheben der Scheibe nach dem Lösen einer Halteschraube.

In der Schälscheibe sind in acht gleich großen Sektoren
Öffnungen bzw. Löcher 4 in Reihen eingestanzt, wobei
alle Löcher auf einer Seite eine hochgeprägte Schälschneide 5 (Schneidzahn) aufweisen. In einem äußeren
kreisringförmigen Bereich B der Schälscheibe 1, der von
der Außenkante der Schälscheibe begrenzt wird, sind die
Schälschneiden 5 der Öffnungen 4 weniger ausgeprägt
ausgeführt, d.h. 0,1 bis 0,45 mm, vorzugsweise 0,25
bis 0,35 mm  vorstehend, als die 0,45 bis 0,6  mm
vorstehenden Schälschneiden von Öffnungen 4', die in
einem inneren Kreisringbereich A angeordnet sind, der
an den Bereich B angrenzt und wie dieser konzentrisch
zur Mittelöffnung 2 liegt. In radialer Richtung ist
der Bereich A schmaler oder gleich breit wie der
Bereich B.

Die Schälscheibe 1 ist auf eine nicht gezeigte Achse
aufsteckbar, die einen Vierkant an der Oberseite
aufweist, der in die Mittelöffnung 2 gelangt. Über
der Schälscheibe wird eine nicht gezeigte Wendeleiste
angeschraubt, die sich mit der Schälscheibe 1 dreht.

Während des anfänglichen Schälvorganges verteilen sich
die Früchte über die ganze Scheibenfläche. Die Rotation
der Schälscheibe befördert die Früchte dann aus dem

Schälbereich A mehr und mehr heraus in den Schälbereich
B, so daß die Früchte nach einer Grobschälung die gewünschte glatte Oberfläche erhalten.

**COHAUSZ & FLORACK** **0025943**

PATENTANWALTSBÜRO

SCHUMANNSTR. 97 · D-4000 DÜSSELDORF
Telefon: (02 11) 68 33 46          Telex: 0858 6513 cop d

PATENTANWÄLTE:
Dipl.-Ing. W. COHAUSZ · Dipl.-Ing. R. KNAUF · Dr.-Ing., Dipl.-Wirtsch.-Ing. A. GERBER · Dipl.-Ing. H. B. COHAUSZ

24.8.79

## Ansprüche

1. Kreisförmige Scheibe zum Schälen von Früchten, insbesondere Knollenfrüchten und Rüben, mit auf der Scheibe angeordneten Reib- oder Schneidelementen, wobei die Früchte während ihrer Bearbeitung von innen nach außen oder umgekehrt auf der Scheibe wandern, d a d u r c h   g e k e n n z e i c h n e t , daß die Reib- oder Schneidfläche in mindestens zwei aneinander angrenzende, zum Scheibenmittelpunkt konzentrische Kreisringbereiche (A, B) unterteilt ist, von denen der oder die Bereich(e) (A), durch den oder durch die die Früchte zuerst bearbeitet werden, eine gröbere Schälung bewirkende Schneiden oder Reibfläche(n) aufweisen als der oder die übrigen Bereich(e) (B).

2. Scheibe nach Anspruch 1, d a d u r c h   g e k e n n z e i c h n e t , daß der oder die eine gröbere Schälung bewirkende(n) Kreisringbereich(e) (A) innerhalb des oder der übrigen Bereiche(s) (B) liegt.

3. Scheibe nach Anspruch 1 oder 2, d a d u r c h   g e k e n n z e i c h n e t , daß nur zwei einander unterschiedliche Kreisringbereiche (A,B) bestehen.

33 315
HC/Be                    - 2 -

4. Scheibe nach einem der Ansprüche 1 bis 3, d a -
d u r c h   g e k e n n z e i c h n e t , daß nur
Schneidelemente (5) vorgesehen sind, die von aus
der Scheibenoberfläche vorstehenden Kanten in der
Scheibe eingebrachter Öffnungen (4, 4') gebildet
werden.

5. Scheibe nach Anspruch 4, d a d u r c h   g e k e n n -
z e i c h n e t , daß in dem oder den eine feinere
Schälung bewirkenden Kreisringbereich(en) (B) die
Kanten (5) der Öffnungen (4) 0,1 bis 0,45 mm, insbesondere 0,25 bis 0,35 mm, gegenüber der Scheibenoberfläche vorstehen und in dem oder den eine gröbere
Schälung bewirkenden Kreisringbereich(en) (A)
0,45 bis 0,6 mm.

6. Scheibe nach einem der Ansprüche 1 bis 5, d a -
d u r c h   g e k e n n z e i c h n e t , daß die
Scheibe (1) um eine lotrechte, durch ihren Mittelpunkt verlaufende Achse sich dreht und über der
Scheibe mindestens eine Wendeleiste angeordnet ist.

0025943

Fig. 1

Fig. 2

Fig. 3

Europäisches
Patentamt

**EUROPÄISCHER RECHERCHENBERICHT**

Nummer der Anmeldung

EP 80 10 5424

| | **EINSCHLÄGIGE DOKUMENTE** | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| | DE - C - 833 266 (CLASEN) <br> * Das ganze Dokument * <br><br> -- | 1,2,3 | A 47 J 17/18 |
| | DE - C - 13 577 (GEHRE) <br> * Das ganze Dokument * <br><br> -- | 1,2,3 | |
| | US - A - 1 945 978 (PALOMBO et al.) <br> * Figuren 1,2,4,5 * <br><br> -- | 1,4 | |
| D | DE - A - 2 626 646 (ALEXANDER-WERK A.G.) <br> * Figuren 1-3 * <br><br> -- | 1,4,6 | RECHERCHIERTE SACHGEBIETE (Int Cl.³) <br><br> A 47 J <br> A 23 N |
| | BE - A - 483 257 (STOEFFLER) <br> * Seite 3; Figuren 1 und 2 * <br><br> -- | 1,6 | |
| A | FR - A - 913 515 (LUBIEZ) <br> * Figur 2 * <br><br> -- | 2 | |
| A | DE - C - 173 298 (ROTTKAMP) <br> * Seite 1, Zeilen 24-40 * <br><br> ---- | 1 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |
| | Der vorliegende Recherchenbericht wurde für alle Patentansprüche erstellt. | | |

| Recherchenort | Abschlußdatum der Recherche | Prüfer |
|---|---|---|
| Den Haag | 19-12-1980 | SCHARTZ |

EPA form 1503.1 06.78